# EUROPEAN PATENT APPLICATION

(11) **EP 1 343 343 A1**
(43) Date of publication of application: **10.09.2003**
(21) Application number: 02251568.8
(22) Date of filing: 06.03.2002
(51) Int. Cl.: H04Q 7/38

(54) **Method and apparatus for channel-type switching based on a packet data transmission parameter**

(71) Applicant: LUCENT TECHNOLOGIES INC., Murray Hill, New Jersey 07974-0636 (US)
(72) Inventor: Iqbal, Jami, Swindon, Wiltshire SN1 2SF (GB); Mustapha, Mazlyn Mona, Swindon, Wiltshire SN25 1WB (GB)
(74) Representative: Sarup, David Alexander

(57) **Abstract**

A method of transmitting packetised data between a radio telecommunications base station and a user terminal is provided. In the method, switching from a dedicated channel to a shared channel is undertaken by measuring periodically a parameter of the data transmission and dependent upon the measured parameter value switching between the channels.

## Description

### Technical Field

The present invention relates to a method of transmitting packetised data between a radio telecommunications base station and a user terminal including switching from a first channel to a second channel. The present invention also relates to a radio telecommunications base station operative to be in communication with a user terminal whereby packetised data is transmitted, the base station comprising channel-switching means.

### Background of the Invention

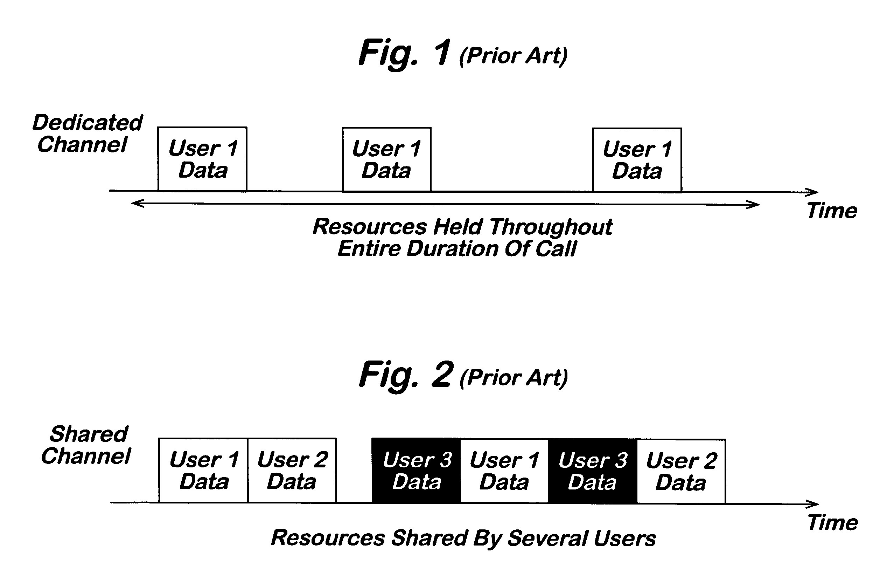

Data may be transmitted using either dedicated or shared channels. For dedicated channels, resources are assigned exclusively to one user for the entire time the user is allocated the channel, regardless of whether the user is using the channel or not. For shared channels (which are also known as common channels), on the other hand. many users share the channel resources, so if one user is idle, another user makes use of the channel resources. This difference between dedicated and shared channels is seen schematically by comparison of Figures 1 and 2.

Dedicated channels are ideally suited for circuit-switched traffic-delay-sensitive data at a constant bit rate or high channel utilisation, for example real-time voice telephony. For delay-sensitive data, the data must basically arrive on time. otherwise the data is useless. Because the user is on a dedicated channel. the data will not be delayed. However, because the channel is dedicated to only one user. low channel utilisation is usual so communication resources are wasted. Generally speaking high channel utilisation is preferable.

Shared channels are best employed when delay-insensitive, bursty (low channel utilisation) data is to be transmitted, e.g. web-browsing. The reason for this is that queuing and delay are inherent in shared channels -- if the channel is being employed by one user, other users must wait until the channel is released before being able to utilise it. If a particular user frequently retains the channel for a long period of time (high utilisation), other users will not have a chance to use the channel. Therefore, for a number of users to share one channel fairly, the traffic of one user should have a fairly low channel utilisation, i.e. not greedily occupy the channel, so that other user's traffic can also be sent.

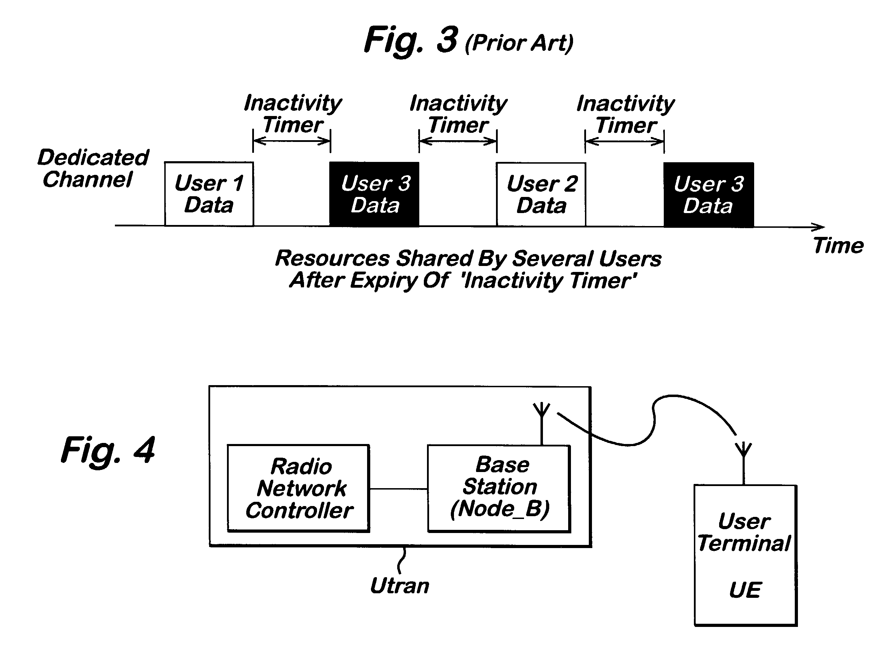

As shown in Figure 3, switching a dedicated channel from one call connection to another can be employed to enhance efficiency to some extent. It involves the use of an inactivity timer' - if a user holding the channel becomes idle for the duration of the inactivity timer, this user then relinquishes the channel so that other users can be allowed to utilise the channel. Due to the inactivity timeout periods. this method of channel sharing is less efficient than the use of shared channels as illustrated by visual comparison of Figures 2 and 3.

### Summary of the Invention

The present invention provides a method of transmitting packetised data between a radio telecommunications base station and a user terminal including switching from a first channel to a second channel by measuring periodically a parameter of the data transmission on at least one of the first channel and the second channel, and dependent upon the measured parameter value(s)switching to the second channel. The present invention in its preferred embodiments thus provides a method to switch data transmission between shared and dedicated channels, or between different types of shared channels.

Preferably the first channel is a channel dedicated to the user terminal and the second channel is a shared channel. Because shared channels offer a more efficient means of sharing channel resources compared with dedicated channels, shared channels should be used when possible. Traffic characteristics of a particular user often change during the duration of a call. In one portion of the call. dedicated channels may be required, and in another, it may be more efficient to use shared channels. Therefore. in order to best utilise the channel resources for varying traffic requirements, the present invention in its preferred embodiments advantageously determines when to switch between shared and dedicated channels.

Preferably the second channel is selected dependent upon power control capability of the second channel. If a shared channel is to be switched to, it may be selected dependent upon its power control capability. This can be useful in optimising both the downlink transmit power of the base station and the transmitting power of the user terminal.

Preferably the base station is a UMTS base station, and one of the first channel and the second channel is a Downlink Shared Channel DSCH shared channel or a Common Packet Channel CPCH shared channel. With the provision of sophisticated power control available on the Downlink Shared Channel (DSCH) and Common Packet Channel (CPCH), more users can be accommodated in the uplink and in the downlink directions.

Furthermore, preferably the base station is a UMTS base station, and one of the first channel and the second channel is a Random Access Channel RACH shared channel.

Preferably the parameter is or depends on the time delay between queuing data to send at the base station and receiving the data at the user terminal. Alternatively the parameter is or depends on data throughput rate. Alternatively, the parameter is or depends on the degree of utilisation of the channel(s).

Preferably switching to the first channel is undertaken dependent upon the or one measured parameter value being greater than a first predetermined threshold. and switching to the second channel is undertaken dependent upon the or said one measured parameter value being less than a second predetermined threshold, the second threshold being lower than the first threshold. Preferably upon a first parameter value being measured indicating a threshold has been overcome. a second measurement of the parameter is made after a predetermined period, switching being undertaken dependent upon whether the second measured value also overcomes the threshold.

The present invention also provides a radio telecommunications base station operative to be in communication with a user terminal whereby packetised data is transmitted. the base station comprising channel-switching means operative to control switching of transmissions from a first channel to a second channel, the channel switching means being operative to measure periodically a parameter of the data transmission on at least one of the first channel and the second channel, and dependent upon the measured parameter value(s) switch to the second channel.

Furthermore preferably the base station is a UMTS base station, the UMTS base station comprising a UMTS radio network controller RNC and an antenna station NodeB for radio telecommunications with a user terminal.

### Brief Description of the Drawings

Preferred embodiments of the present invention will now be described by way of example and with reference to the drawings, in which:
Figure 1 is a diagram illustrating use of a dedicated channel (prior art),
Figure 2 is a diagram illustrating use of a shared channel (prior art),
Figure 3 is a diagram illustrating sharing of dedicated channel using an inactivity timer (prior art),
Figure 4 is a diagram illustrating a preferred Universal Mobile Telecommunications System UMTS network,
Figure 5 is a diagram illustrating criteria for switching between dedicated and shared channels,
Figure 6 is a diagram illustrating the hysteresis (yo-yo effect) when using a single switching threshold.
Figure 7A is a flowchart illustrating dedicated to shared channel switching based on delay measurements,
Figure 7B is a flowchart illustrating shared to dedicated channel switching based on delay measurements,
Figure 8A is a flowchart illustrating dedicated to shared channel switching based on throughput measurements.
Figure 8B is a flowchart illustrating shared to dedicated channel switching based on throughput measurements.
Figure 9A is a flowchart illustrating dedicated to shared channel switching based on channel utilisation measurements. and
Figure 9B is a flowchart illustrating shared to dedicated channel switching based on channel utilisation measurements,

### Detailed Description

As shown in Figure 4, a preferred UMTS radio access network UTRAN consists of a radio network controller RNC which controls the operation of several base stations (denoted NodeB in UMTS terminology) (one of which is shown in Figure 4 for simplicity). A base station communicates with a mobile user terminal (user equipment UE) during a call connection to that user terminal UE. Switching of channels for communications between the base station and user terminal is controlled by the radio network controller RNC.

Efficient use of dedicated and shared channels is made by the use of a method to trigger switching between dedicated and switched channels (or between different shared channel types) dependent upon measured delay, throughput or channel utilisation per user.

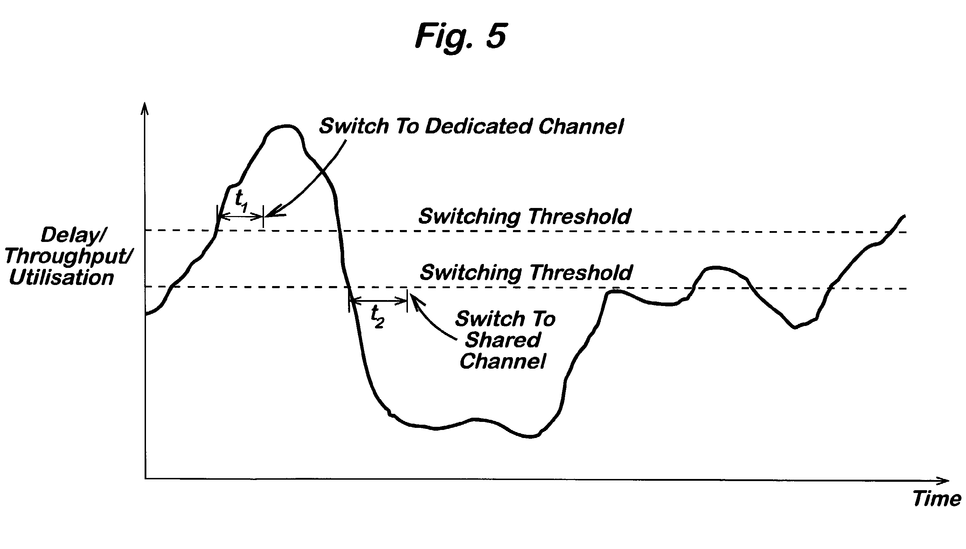

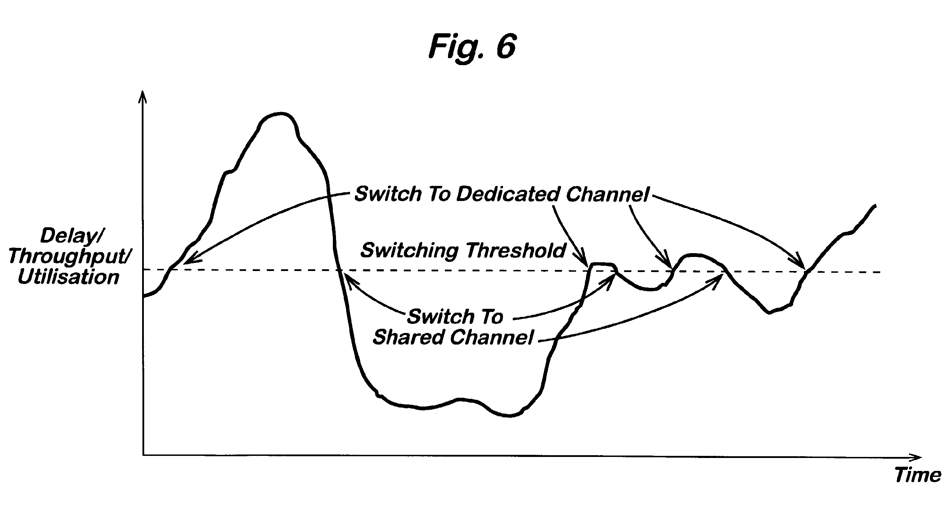

In some embodiments, a pair of thresholds are used - one will trigger switching in one direction (e.g. from dedicated to shared) and the other will trigger switching in the other direction (e.g. from shared to dedicated). This is shown in Figure 5. The two thresholds are used so as to avoid a yo-yoing effect, i.e. too many transitions triggered when the measured value oscillates about the threshold, as shown in Figure 6. In addition, a timer is activated to measure out a time period after a threshold has been crossed before switching is undertaken. These period are shown as t₁ and t₂ in Figure 5. At the expiry of the timed period t₁ or t₂, if the measured value remains on the same side of the threshold as when the timed period began, channel switching is initiated.

In other embodiments, a single threshold is used as shown in Figure 6.

In some embodiments, delay is the parameter monitored and upon which switching depends. In some other embodiments, throughput is the parameter monitored and upon which switching depends. In yet further embodiments. channel utilisation is the parameter monitored and upon which switching depends. These three parameters are considered in turn below.

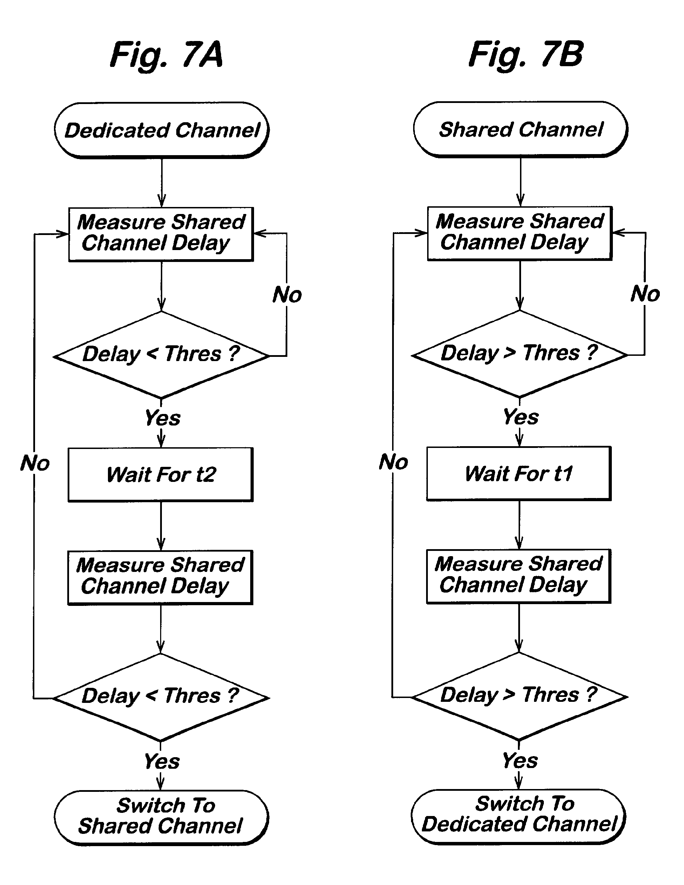

Delay: If the number of users on a shared channel is low, the delay associated with using the shared channel is also low. If this delay is low enough to satisfy the requirements for delay-sensitive traffic, shared channels could be used for delay-sensitive traffic so as to preserve the number of available dedicated channels. Switching from a dedicated to a shared channel then occurs as shown in Figure 7A. If the delay starts to increase above this threshold, then this delay-sensitive traffic is switched back from a shared to a dedicated channel. A flow chart for this is shown in Figures 7B. Furthermore, if the delay on a shared channel is high. traffic is switched to dedicated channels to relieve congestion.

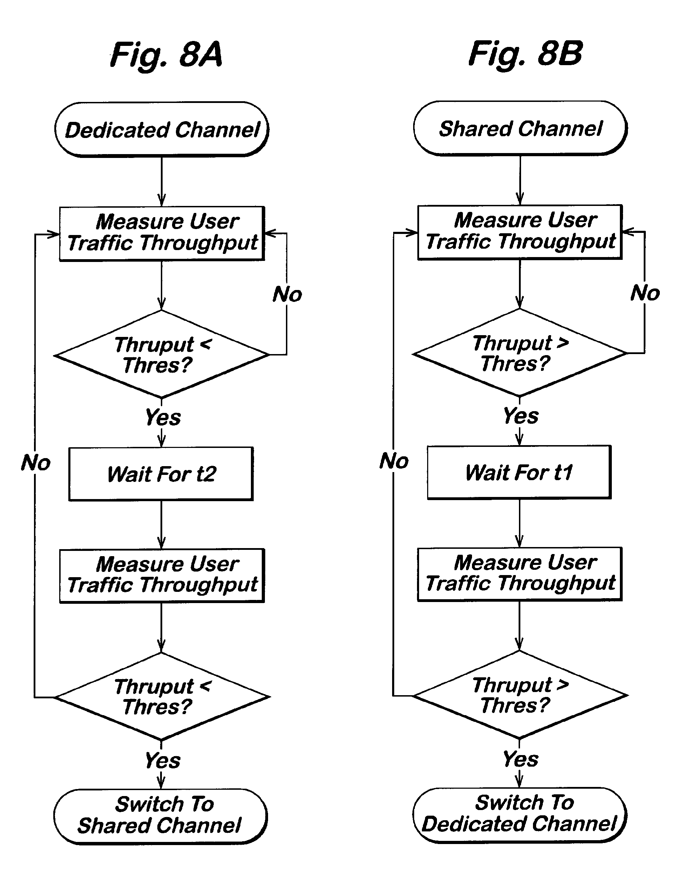

Throughput: There are shared channels, e.g. Random Access Channel (RACH) in UMTS, that are suitable for low throughput traffic. If the data throughput (bits/sec)ofa particular user on a dedicated channel (or another shared channel type, e.g. Common Packet Channel CPCH in UMTS) falls below a certain threshold, that user could be switched on to the shared channel suitable for low throughput (the shared RACH for example), as shown in Figure 8A; and vice versa if the data throughput exceeds the threshold, as shown in Figure 8B.

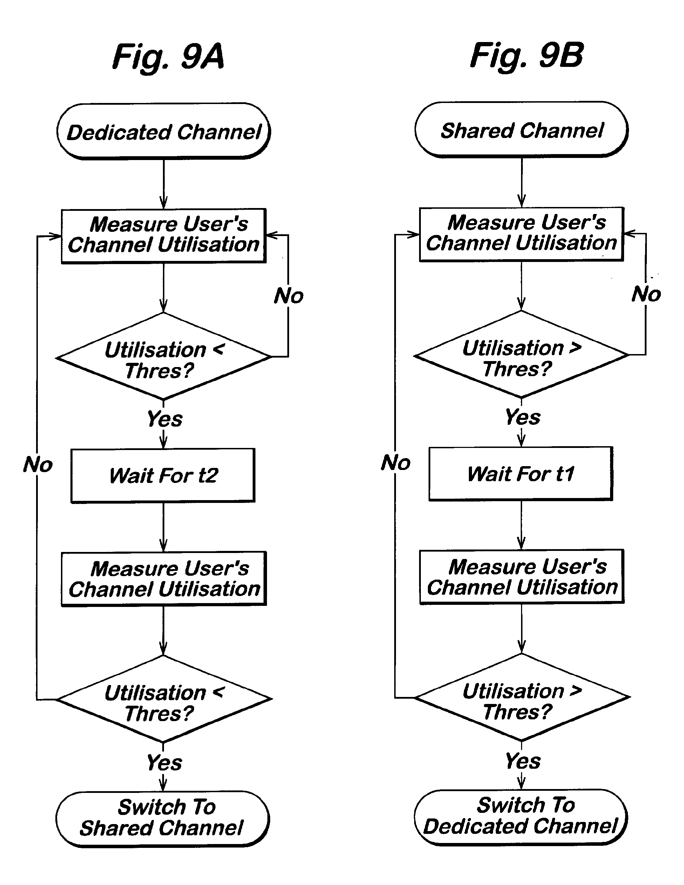

Channel Utilisation: Again, if the channel utilisation of a dedicated channel , i.e. the measured fraction of the time in which the channel is actually in use in sending user data, falls below a given threshold, the user's traffic is moved to a shared channel in order to optimise the channel usage. A flow chart for this is shown in Figure 9A. If channel utilisation exceeds a threshold, a switch to a dedicated channel is made, as shown in Figure 9B.

In UMTS, the Downlink Shared Channel (DSCH) and Common Packet Channel (CPCH) are types of shared channel that are particularly suitable for bursty traffic, i.e. low channel utilisation.

### Shared Channel Power Control Capability

In a UMTS network, the use of a Downlink Shared Channel (DSCH) allows precise control of the downlink base station transmit power, and hence the downlink interference caused by the base station occuring in communications from other base stations to user terminals. This is useful in keeping interference low in the downlink direction i.e. from base stations to user terminals . and thus enhances the capacity of the system.

If a decision had been made to switch a user from a dedicated channel to a shared channel but the downlink base station transmit power and hence the uplink interference are high, the Downlink Shared Channel (DSCH) is selected as the shared channel to switch to instead of the Forward Access Channel (FACH). This is because the DSCH has a greater degree of power control as opposed to FACH and, by using the DSCH, the downlink base station transmit power can be optimised.

## Claims

1. A method of transmitting packetised data between a radio telecommunications base station and a user terminal including switching from a first channel to a second channel by measuring periodically a parameter of the data transmission on at least one of the first channel and the second channel, and dependent upon the measured parameter value (s) switching to the second channel.

2. A method of transmitting packetised data according to claim 1, in which the first channel is a channel dedicated to the user terminal and the second channel is a shared channel.

3. A method according to any preceding claim in which the second channel is selected dependent upon power control capability of the second channel.

4. A method according to any preceding claim, in which the base station is a UMTS base station, and one of the first channel and the second channel is a Downlink Shared Channel DSCH shared channel or a Common Packet Channel CPCH shared channel.

5. A method of transmitting packetised data according to any preceding claim, in which the parameter is or depends on the time delay between queuing data to send at the base station and receiving the data at the user terminal.

6. A method of transmitting packetised data according to any of claims 1 to 5. in which the parameter is or depends on data throughput rate.

7. A method of transmitting packetised data according to any of claims 1 to 5, in which the parameter is or depends on the degree of utilisation of the channel(s).

8. A method of transmitting packetised data according to any preceding claim. in which switching to the first channel is undertaken dependent upon the or one measured parameter value being greater than a first predetermined threshold. and switching to the second channel is undertaken dependent upon the or said one measured parameter value being less than a second predetermined threshold, the second threshold being lower than the first threshold.

9. A method of transmitting packetised data according to claim 9, in which upon a first parameter value being measured indicating a threshold has been overcome, a second measurement of the parameter is made after a predetermined period, switching being undertaken dependent upon whether the second measured value also overcomes the threshold.

10. A radio telecommunications base station operative to be in communication with a user terminal whereby packetised data is transmitted. the base station comprising channel-switching means operative to control switching of transmissions from a first channel to a second channel, the channel switching means being operative to measure periodically a parameter of the data transmission on at least one of the first channel and the second channel, anddependent upon the measured parameter value(s)switch to the second channel.
